# EUROPÄISCHE PATENTSCHRIFT

(11) **EP 1 663 566 B1**
(45) Veröffentlichungstag und Bekanntmachung des Hinweises auf die Patenterteilung: **19.06.2013**
(21) Anmeldenummer: 04786197.6
(22) Anmeldetag: 31.08.2004
(51) Int. Cl.: B23K 26/32, F01D 5/00, B23K 26/12, B23K 26/06, B23K 26/20

(54) **VERFAHREN UND VORRICHTUNG ZUM SCHWEISSEN VON BAUTEILEN**
METHOD AND DEVICE FOR WELDING STRUCTURAL PARTS
PROCEDE ET DISPOSITIF POUR SOUDER DES ELEMENTS DE CONSTRUCTION

(30) Priorität: 24.09.2003 DE 10344225
(43) Veröffentlichungstag der Anmeldung: 07.06.2006
(73) Patentinhaber: MTU Aero Engines GmbH, 80995 München (DE)
(72) Erfinder: EMILJANOW, Klaus, 31319 Sehnde (DE)
(86) Internationale Anmeldenummer: PCT/DE2004/001921
(87) Internationale Veröffentlichungsnummer: WO 2005/030429

(56) Entgegenhaltungen:
- DE-A1- 4 327 189
- DE-A1- 10 005 874
- DE-A1- 19 630 703
- US-A- 4 549 058
- US-A- 5 160 822

## Beschreibung

Die Erfindung betrifft ein Verfahren zum Schweißen von Bauteilen vorzugsweise einer Gasturbine, insbesondere eines Flugtriebwerks, gemäß dem Oberbegriff des Patentanspruchs 1. Des weiteren betrifft die Erfindung eine Vorrichtung zum Schweißen von Bauteilen vorzugsweise einer Gasturbine, insbesondere eines Flugtriebwerks, gemäß dem Oberbegriff des Patentanspruchs 8. US 5 160 822 A offenbart ein solches Verfahren und eine solche Vorrichtung.

Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickeit, die den obigen Anforderungen voll gerecht werden und ein hohes Maß an technischer Perfektion erreicht haben. Bei der Entwicklung von Flugtriebwerken spielt unter anderem die Werkstoffauswahl, die Suche nach neuen, geeigneten Werkstoffen sowie die Suche nach neuen Fertigungsverfahren eine entscheidende Rolle. Da Gasturbinen einer hohen Beanspruchung unterliegen und daher während des Betriebs schadhafte Bereiche an der Gasturbine entstehen können, ist es weiterhin von Bedeutung, hochentwickelte Reparaturverfahren bereitzustellen, so dass die schadhaften Bereiche zuverlässig, sicher, schnell und kostengünstig repariert werden können.

Die wichtigsten, heutzutage für Flugtriebwerke oder sonstige Gasturbinen verwendeten Werkstoffe sind Titanlegierungen, Nickellegierungen (auch Superlegierungen genannt) und hochfeste Stähle. Die hochfesten Stähle werden für Wellenteile, Getriebeteile, Verdichtergehäuse und Turbinengehäuse verwendet. Titanlegierungen sind typische Werkstoffe für Verdichterteile, insbesondere für Verdichterschaufeln. Nickellegierungen sind für die heißen Teile des Flugtriebwerks geeignet, so zum Beispiel für Turbinenschaufeln. Gasturbinenbauteile der neuesten Generation werden aus gerichtet erstarrten oder einkristallinien Werkstoffen gefertigt, wobei zusätzlich zur Gewichtsoptimierung die Wandstärken der Bauteile konstruktiv immer dünner ausgelegt werden.

Die oben beschriebenen Tendenzen bei der Entwicklung von Gasturbinenbauteilen, nämlich die Suche nach immer verbesserten Werkstoffen und die zunehmende Gewichtsoptimierung der Bauteile, stellt sehr hohe Anforderungen an die Fertigungsverfahren sowie Reparaturverfahren, worunter auch Schweißverfahren fallen.

Die hier vorliegende Erfindung betrifft ein neuartiges Schweißverfahren, insbesondere Reparaturschweißverfahren, für Bauteile, insbesondere für Gasturbinenbauteile, So zeigen nämlich hochwarmfeste Superlegierungen, die als gerichtet erstarrte Werkstoffe sowie einkristalfine Werkstoffe vorliegen können, beim Schweißen eine hohe Rissempfindlichkeit sowie Verzugsanfälligkeit. Mit herkömmlichen Schweißverfahren sind demnach Bauteile aus den obigen Werkstoffen nur schlecht bearbeitbar bzw, reparierbar.

Die DE 43 27 189 C2 betrifft ein Reparaturschweißverfahren für Schaufelblätter von Gasturbinen. Bei dem dort offenbarten Verfahren, erfolgt eine Stumpfschweißung einer zuvor präparierten Reparaturfläche, wobei als Stumpfschweißverfahren entweder Wolfram-Plasma-Lichtbogen (WPL)-Schweißen, Laserstrahlschweißen oder Elektronenstrahlschweißen zum Einsatz kommt. Als Laserquelle findet hier ein CO₂-Laser Verwendung.

Die DE 196 30 703 C2 offenbar ein Verfahren und eine Vorrichtung zum Reparaturschwei-βen von Bauteilen, die aus einer Nickel-Basis-Legierung hergestellt sind. Bei dem Reparaturschweißverfahren gemäß DE 196 30 703 C2 findet eine induktive Erwärmung des zu schweißenden Bauteils statt, wobei als Schweißverfahren entweder ein Laserschweißen, WIG-Schweißen oder Plasmaschweißen verwendet wird.

Diese bekannten Schweißverfahren, insbesondere Reparaturschweißverfahren, verfügen über den Nachteil, dass beim Schweißen eine relativ hohe Wärme in das zu schweißende Bauteil eingebracht wird. Infolge der hohen Wärmeeinbringung in das Bauteil kann es insbesondere bei dünnwandigen Bauteilen aus Superlegierungen, insbesondere aus gerichtet erstarrten Werkstoffen oder einkristallinen Werkstoffen, zu einem Einbrand, Durchsacken des Schmelzbades, Verzug am Bauteil oder einer erneuten oder erweiterten Rissbildung kommen. Bei doppelwandigen Bauteilen können sich unzulässige Schweißdurchhänge ausbilden, Diese Schweißverfahren erfordern demnach einen hohen Nachbearbeitungsaufvrand. Des weiteren stellen sich bei den Schweißverfahren nach dem Stand der Technik erhebliche Qualitätsschwankungen ein.

Aus den Dokumenten DE 100 05 874 A 1 und US 5 160 822 A sind Verfahren zum Reparaturschweißen von Gasturbinenbauteilen durch gepulstes Laserschweißen bekannt.

Hiervon ausgehend liegt der vorliegenden Erfindung das Problem zu Grunde, ein neuartiges Verfahren sowie eine neuartige Vorrichtung zum Schweißen von Bauteilen vorzugsweise einer Gasturbine vorzuschlagen.

Dieses Problem wird dadurch gelöst, dass das eingangs genannte Verfahren durch die Merkmale des kennzeichnenden Teils des Patentanspruchs 1 weitergebildet ist.

Erfingdungsgemäß wird ein Schweißdraht automatisch in den Bereich des Laserstrahls der oder jeder Laserquelle geführt, wobei eine Steuerungseinrichtung einen Drahtvorschub des Schweißdrahts abhängig von den Pulsen der oder jeder Laserquelle bestimmt.

Das erfindungsgemäße Schweißverfahren zeichnet sich durch eine gezielte und sehr geringe Wärmeeinbringung in das zu schweißende Bauteil aus. Die in das zu schweißende Bauteil eingebrachte Energie und damit der eingebrachte Wärmeeintrag sind präzise kontrollierbar. Mithilfe des erfindungsgemäßen Verfahrens können sehr feine und reproduzierbare Schweißnähte auch bei Bauteilen aus Superlegierungen, insbesondere aus gerichtet erstarrten oder einkristallinen Werkstoffen, und bei dünnwandigen Bauteilen erzeugt werden. Die Schweißqualität wird verbessert und die Nacharbeit durch wiederauftretende Risse, Einbrände, Bauteilverzug und dergleichen wird auf ein Minimum reduziert. Das erfindungsgemäße Schweißverfahren kommt ohne Vorwärmung der zu schweißenden Bauteile aus.

Das Laserschweißen des Bauteils wird vorzugsweise im unvorgewärmten Zustand des Bauteils unter einer Schutzgasatmosphäre durchgeführt.

Die erfindungsgemäße Vorrichtung ist im unabhängigen Patentanspruch 8 definiert und vorzugsweise als Handlaservorrichtung ausgebildet. Das erfindungsgemäße Verfahren sowie die erfindungsgemäße Vorrichtung werden vorzugsweise zum Schweißen von Bauteilen aus einem gerichtet erstarrten oder einem einkristallinen Werkstoff verwendet.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:

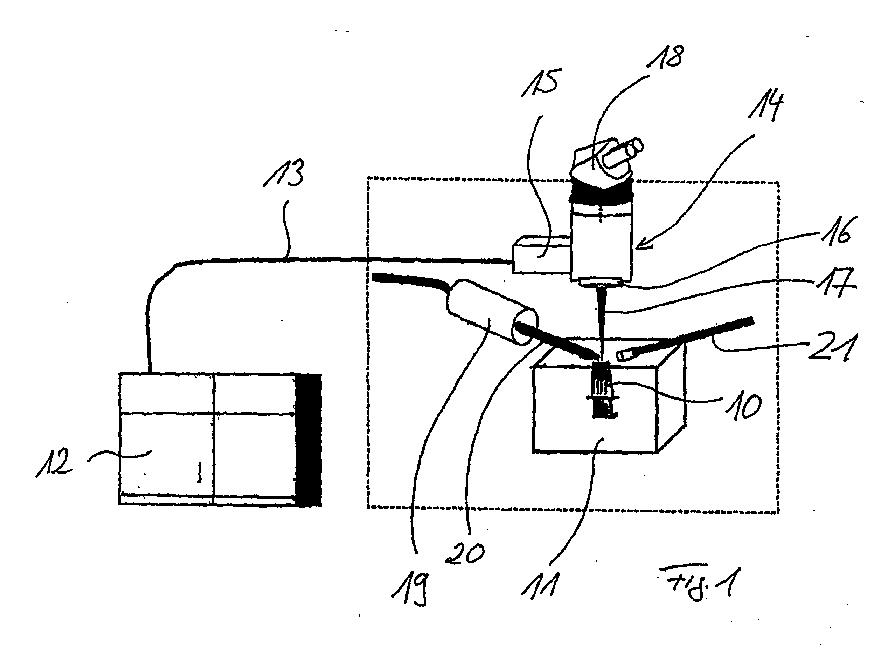

- Fig. 1:: eine schematisierte Darstellung einer erfindungsgemäßen Vorrichtung zur Durchführung des erfindungsgemäßen Verfahrens.

Nachfolgend werden das erfindungsgemäße Verfahren sowie die erfindungsgemäße Vorrichtung zum Schweißen, insbesondere zum Reparaturschweißen, von Bauteilen, vorzugsweise einer Gasturbine, in größerem Detail erläutert. Fig. 1 zeigt ein bevorzugtes Ausführungsbeispiel einer erfindungsgemäßen Vorrichtung zum Schweißen von Gasturbinenbauteilen, wobei die Vorrichtung als Handlaservorrichtung ausgebildet ist.

Beim Ausführungsbeispiel der Fig. 1 ist ein zu schweißendes Bauteil 10 in einem Schweißraum bzw. Aufnahmeraum 11 angeordnet. Das Bauteil 10 ist im gezeigten Ausführungsbeispiel als Gasturbinenschaufel ausgebildet.

Das Schweißen des Bauteils 10 im Aufnahmeraum 11 erfolgt durch Laserschweißen. Die Vorrichtung gemäß Fig. 1 umfasst eine Laserquelle 12, wobei das von der Laserquelle 12 erzeugte Laserlicht über eine Lichtleitfaser 13 in den Bereich einer Bearbeitungsstation 14 führt. Die Bearbeitungsstation 14 umfasst optische Elemente 15, 16, um das von der Laserquelle 12 erzeugte Laserlicht zu fokussieren und als gerichteten Laserstrahl 17 auf das zu schweißende Bauteil 10 zu leiten bzw. zu richten. Mit einem der Bearbeitungsstation 14 zugeordneten Stereomikroskop 18 kann der Schweißprozess überwacht bzw. beobachtet werden.

Es liegt nun im Sinne der hier vorliegenden Erfindung, dass die Laserquelle 12 im sogenannten Pulsverfahren betrieben wird. Das Laserschweißen wird demnach im Pulsverfahren durchgeführt, wobei das Bauteil demnach unter Verwendung eines pulsierenden Laserstrahls 17 geschweißt wird. Hierbei sind die Pulsdauer und/oder Pulsform und/oder die Leistung des Laserstrahls 17 bzw. der Laserquelle 12 variabel einstellbar. Es kann sowohl im Dauerpulsbetrieb als auch mit einzeinen Pulsen geschweißt werden. Die Pulsform sowie Pulsdauer sowie Leistung des Laserstrahls 17 wird hierbei vorzugsweise von einer nicht-dargestellten Steuerungseinrichtung gesteuert. Hierdurch kann der Laserstrahl 17 sehr definiert auf das Bauteil 17 gerichtet bzw. fokussiert werden, wodurch die durch den Laserstrahl 17 eingebrachte Energie präzise kontrollierbar ist. Der Wärmeeintrag beim Schweißen im Pulsverfahren ist sehr gering, wodurch ein zu großes Schmelzbad vermieden wird. Aufgrund des gepulsten Laserschweißverfahrens werden Formveränderungen, Teileverzug, Gefügeänderungen und Rissbildungen am zu schweißenden Bauteil 10 auf ein Minimum reduziert.

Das erfindungsgemäße Verfahren des Laserschweißens im Pulsbetrieb ist besonders vorteilhaft bei dünnwandigen Bauteilen aus Superlegierungen, die in gerichtet erstarrter oder einkristalliner Form vorliegen, verwendbar. Bei diesen Bauteilen handelt es sich insbesondere um Schaufeln von Gasturbinen. Derartige Bauteile sind beim Schweißen besonders empfindlich und lassen sich mithilfe des erfindungsgemäßen Verfahrens ohne Vorwärmung, d.h. im unvorgewärmten Zustand, schweißen. Dies erlaubt eine besonders zuverlässige, sichere, schnelle und kostengünstige Reparatur von Gasturbinenschaufeln. Mit dem erfindungsgemäßen, gepulsten Laserschweißverfahren können verschlissene Kanten von Gasturbinenschaufeln sehr konturgenau nachgeschweißt werden sowie Risse in den Turbinenschaufeln zuverlässig geschlossen werden.

Die erfindungsgemäße Vorrichtung verfügt weiterhin über eine Drahtzuführungseinrichtung 19. Mithilfe der Drahtzuführungseinrichtung 19 wird ein Schweißdraht 20 an das zu schweißende Bauteil 10 herangeführt. Im Sinne der hier vorliegenden Erfindung wird die Drahtzuführungseinrichtung 19 von der nicht-dargestellten Steuerungseinrichtung derart gesteuert, dass ein Drahtvorschub des Schweißdrahts 20 an die Pulsdauer und/oder Pulsform und/oder Leistung des gepulsten Laserschweißverfahrens angepasst wird. Der Drahtvorschub wird dabei so gesteuert, dass pro Schweißpuls der Schweißdraht 20 dem zu schweißenden Bauteil 10 exakt zugeführt wird. Die Geschwindigkeit des Drahtvorschubs wird dabei vorzugsweise in Abhängigkeit der Laserleistung eingestellt. Mittels empirisch ermittelter Schweißparameter, die in einer Datenbank der nicht-dargestellten Steuerungseinrichtung gespeichert sind, können abhängig vom vorliegende Schadensfall die notwendigen Schweißparameter abgerufen werden. Es liegt im Sinne der hier vorliegenden Erfindung, dass die Drahtzufuhr des Schweißdrahts 20 zur Erhöhung der Prozesssicherheit von einer CNC-Maschine durchgeführt wird, die von der nicht-dargestellten Steuerungseinrichtung angesteuert wird.

Das Schweißen des zu reparierenden Bauteils 10 erfolgt im Aufnahmeraum 11 vorzugsweise unter einer Schutzgasatmosphäre. Ein Schutzgas wird über eine Schutzgaszufuhr 21 in den Aufnahmeraum 11 eingeleitet. Die Auswahl eines geeigneten Schutzgases hängt von den Materialien der zu schweißenden Bauteile ab und obliegt dem hier angesprochenen Fachmann.

Als Laserquelle 12 findet ein Festkörperlaser, vorzugsweise ein Nd-YAG-Festkörperlaser, Verwendung. Dieser Festkörperlaser wird im Pulsbetrieb betrieben und ist von einer Steuerungseinrichtung ansteuerbar. Bevorzugt ist die Verwendung eines gepulsten Festkörperlasers, dessen mittlere Laserleistung in einem Bereich von 100 W bis zu 500 W liegt, wobei die Pulsspitzenteistung mindestens 6 bis 10 kW beträgt. Die Pulsenergie schwankt zwischen 0,1 bis 80 J und die Pulsdauer ist zwischen 0,1 und 30 ms variabel einstellbar. Der Festkörperlaser wird optisch angeregt, vorzugsweise ist derselbe als ein diodengepumpter oder lampengepumpter Festkörperlaser ausgebildet.

Die in Fig. 1 dargestellte erfindungsgemäße Vorrichtung ist als stationäres Handschweißgerät bzw. Handlasergerät ausgebildet. Bei dem beschriebenen, bevorzugten Ausführungsbeispiel, bei welchem Pulsdauer, Pulsform und Leistung des Laserstrahls 17 sowie die Drahtzufuhr des Schweißdrahts 20 von einer Steuerungseinrichtung gesteuert werden, bedeutet dies, dass ein Bediener in diesem Fall nur noch das zu schweißende Bauteil 10 unter dem Laserstrahl 17 zu führen hat und die Qualität des Schweißvorgangs über das Stereomikroskop 18 beobachten kann. Optional kann auch bei starren oder bei linearen Anwendungen der Vorschub des Bauteils über ein 3-Achs-System durchgeführt werden. Die motorisch angetriebene, gesteuerte Drahtzufuhr ist jedoch exakter und damit bevorzugt.

Die oben beschriebene Ausführungsform der erfindungsgemäßen Vorrichtung als stationäres Handschweißgerät eignet sich vor allem zur Bearbeitung, nämlich zum Schweißen oder Reparaturschweißen, kleinerer Gasturbinenbauteile, wie zum Bespiel von Gasturbinenschaufel. Zur Bearbeitu ng größerer Bauteile oder zur Durchführung von Schweißarbeiten direkt an der Gasturbine ist die erfindungsgemäße Vorrichtung auch als mobiles Schweißgerät realisierbar. Mit einer derartigen Ausführungsform können auch großvolumige, schwere und schwer zugänglich Bauteile bearbeitet werden. In diesem Fall ist die Bearbeitungsstation 14 an einem schwenkbaren Arm befestigt, der in den Bereich des zu schweißenden Bauteils verfahren werden kann. Weiterhin ist vorstellbar, die Bearbeitungsstation 14 über ein mehrachsiges Portalsystem an das zu bearbeitende Bauteil heranzuführen. In diesem Fall ist die erfindungsgemäße Vorrichtung als Portalsystem ausgeführt.

Das erfindungsgemäße Verfahren sowie die erfindungsgemäße Vorrichtung finden bevorzugt Verwendung beim Schweißen, insbesondere beim Reparaturschweißen, von Bauteilen aus hochwarmfesten Superlegierungen, die in gerichtet erstarrter oder einkristalliner Form vorliegen. Mit dem neuen Verfahren können Bauteile von Gasturbinen, wie rotationssymmetrische Bauteile, zum Beispiel Dichtungen und Halteringe, geschweißt werden. Neben Gehäuseteilen lassen sich auch Laufschaufeln sowie Leitschaufeln von Hochdruckturbine, Niederdruckturbine und Kompressor bzw. Verdichter schweißen. Es lassen sich alle Superalloys-γ'-Phase-Materialien und Materialien aus der MCrAIY-Familie und alle Hochtemperatur-Legierungen sowie Legierungen der Nickelgruppe oder Kobaltgruppe zwerlässig schweißen. Beispiele von mit des erfindungsgemäßen Verfahrens schweißbaren Materialen sind: R'80, R'41, DSR'142, R'N5, R'N4, PWA 1426, PWA 1484, PWA 1480, MARM 509 oder auch MARM 274. Als Schweißdraht findet vor allem ein Schweißdraht Verwendung, der über dieselbe Zusammensetzung verfügt wie das zu schweißende Bauteil.

Mithilfe der hier vorliegenden Erfindung lassen sich gegenüber dem Stand der Technik eine Vielzahl von Vorteilen realisieren. So ergibt sich eine Reduzierung der Rissbildung nach dem Schweißen bzw. während des Schweißens. Weiterhin wird der Verzug an den zu schweißen den Bauteilen bedingt durch die geringere Wärmeeinflusszone und den geringeren Wärmeeintrag reduziert. Beim Schweißen können höhere Festigkeiten sowie ein feinkörnigeres Schweißgut erzielt werden, was einer Qualitätsverbesserung des Schweißvorgangs gleichkommt. Es ist ein zuverlässiges Reparaturschweißen auch von extrem dünnwandigen Bauteilen möglich. Die erfindungsgemäße Vorrichtung ist sehr variabel. Mit ihr können einerseits kleine Bauteile als auch andererseits große, schwere und schwer zugängliche Bauteil geschweißt werden. Durch die Steuerung der Laserpulse und die Steuerung der Drahtzufuhr ergibt sich eine reproduzierbare Schweißqualität. Mithilfe des erfindungsgemäßen Verfahrens ist eine dauerhafte sowie verschleißfeste Schweißverbindung herstellbar. Aufgrund der artgleichen Zusammensetzung des zu schweißenden Bauteils und des als Zusatzwerkstoff dienenden Schweißdraht erreicht die erzeugte Schweißnaht nahezu die gleichen Eigenschaf ten wie das Grundmaterial und hat damit eine geringere Anfälligkeit im späteren Betrieb, insbesondere gegenüber Thermoermüdungsrissen, da es die gleichen Wärmeausdehnungskoeffizienten aufweist, wie das Grundmaterial.

## Patentansprüche

1. Verfahren zum Schweißen, insbesondere zum Reparaturschweißen, von Bauteilen vorzugsweise einer Gasturbine, insbesondere eines Flugtriebwerks, wobei ein Bauteil (10) mit Hilfe mindestens einer Laserquelle (12) lasergeschweißt wird, die oder jede Laserquelle (12) im Pulsverfahren betrieben wird und die Pulsdauer variabel eingestellt wird, **dadurch gekennzeichnet, dass** ein Schweißdraht (17) automatisch in den Bereich des Laserstrahls (17) der oder jeder Laserquelle (12) geführt wird, wobei ein Drahtvorschub des Schweißdrahts (17) abhängig von der Pulsdauer der oder jeder Laserquelle (12) gesteuert wird.

2. Verfahren nach Anspruch 1, **dadurch gekennzeichnet, dass** das Laserschweißen des Bauteils (10) im unvorgewärmten Zustand des Bauteils durchgeführt wird.

3. Verfahren nach Anspruch 1 oder 2, **dadurch gekennzeichnet, dass** das Laserschweißen des Bauteils (10) unter einer Schutzgasatmosphäre durchgeführt wird.

4. Verfahren nach einem der Ansprüche 1 bis 4, **dadurch gekennzeichnet, dass** bei jedem Puls der oder jeder Laserquelle (12) der Schweißdraht (17) vorgeschoben wird.

5. Verwendung des Verfahrens nach einem der Ansprüche 1 bis 5 zum Schweißen von Bauteilen aus einem gerichtet erstarrten oder einem einkristallinen Werkstoff.

6. Verwendung des Verfahrens nach einem der Ansprüche 1 bis 5 zum Schweißen von Bauteilen aus einer Nickelbasislegierung oder Kobaltbasislegierung, insbesondere von Bauteilen aus einem MCrAIY-Werkstoff.

7. Vorrichtung zum Schweißen, insbesondere zum Reparaturschweißen, von Bauteilen (10) vorzugsweise einer Gasturbine, insbesondere eines Flugtriebwerks, mit mindestens einer Laserquelle (12), wobei die Vorrichtung insbesondere als Handlaservorrichtung ausgebildet ist, die Vorrichtung eine Steuerungseinrichtung zum Pulsen der oder jeder Laserquelle (12) aufweist und mit Hilfe der Steuerungseinrichtung die Pulsdauer variabel einstellbar ist, **gekennzeichnet durch** eine von der Steuerungseinrichtung ansteuerbare Drahtzuführungseinrichtung (19), welche einen Schweißdraht (10) automatisch in den Bereich des Laserstrahls (17) der oder jeder Laserquelle (12) führt, wobei die Steuerungseinrichtung die Drahtzuführungseinrichtung (19) derart steuert, dass ein Drahtvorschub des Schweißdrahts (20) von der Pulsdauer der oder jeder Laserquelle (12) abhängig ist.

8. Vorrichtung nach der Anspruch 8, **gekennzeichnet durch** einen Aufnahmeraum (11) für das zu schweißende Bauteil (10), wobei das Laserschweißen im Aufnahmeraum (11) unter einer Schutzgasatmosphäre durchführbar ist.

9. Vorrichtung nach der Anspruch 8 oder 9, **dadurch gekennzeichnet, dass** die oder jede Laserquelle (12) als ein Festkörperlaser, insbesondere als ein Nd-YAG-Festkörperlaser, ausgebildet ist.

10. Vorrichtung nach Anspruch 10, **dadurch gekennzeichnet, dass** der Festkörperlaser als ein optisch angeregter, vorzugsweise als ein diodengepumpter oder lampengepumpter, Festkörperlaser ausgebildet ist.

11. Verwendung der Vorrichtung nach einem der Ansprüche 8 bis 11 zum Schweißen von Bauteilen aus einem gerichtet erstarrten oder einem einkristallinen Werkstoff.

12. Verwendung der Vorrichtung nach einem der Ansprüche 8 bis 11 zum Schweißen von Bauteilen aus einer Nickelbasislegierung oder Kobaltbasislegierung, insbesondere von Bauteilen aus einem MerAIY-Werkstoff.

## Claims

1. Method for welding, in particular repair-welding, components, preferably of a gas turbine, in particular of an aircraft engine, wherein a component (10) is laser-welded with the aid of at least one laser source (12), the or each laser source (12) is operated in pulsed mode, and the pulse duration is variably adjusted, **characterised in that** a welding wire (17) is automatically guided into the region of the laser beam (17) of the or each laser source (12), wherein a wire-feed rate of the welding wire (17) is controlled as a function of the pulse duration of the or each laser source (12).

2. Method according to claim 1, **characterised in that** the laser-welding of the component (10) is carried out in the non-preheated state of the component.

3. Method according to claim 1 or 2, **characterised in that** the laser-welding of the component (10) is carried out in an inert-gas atmosphere.

4. Method according to one of claims 1 to 4, **characterised in that** the welding wire (17) is advanced with each pulse of the or each laser source (12).

5. Application of the method according to one of claims 1 to 5 for welding components made from a directionally solidified or a monocrystalline material.

6. Application of the method according to one of claims 1 to 5 for welding components made from a nickel-based alloy or cobalt-based alloy, in particular components made from an MCrAIY material.

7. A device for welding, in particular repair-welding, components (10), preferably of a gas turbine, in particular of an aircraft engine, halving at least one laser source (12), wherein the device is formed in particular as a hand-held laser device, the device has a control device for pulsing the or each laser source (12), and the pulse duration can be variably adjusted with the aid of the control device, **characterised by** a wire-feeding device (19) that can be activated by the control device and automatically guides a welding wire (10) into the region of the laser beam (17) of the or each laser source (12), wherein the control device controls the wire-feeding device (19) in such a way that a wire-feed rate of the welding wire (20) is dependent upon the pulse duration of the or each laser source (12).

8. A device according to claim 8, **characterised by** a receiving chamber (11) for the component (10) that is to be welded, wherein the laser welding can be carried out in the receiving chamber (11) in an inert-gas atmosphere.

9. A device according to claim 8 or 9, **characterised in that** the or each laser source (12) is formed as a solid-state laser, in particular as an Nd-YAG solid-state laser.

10. A device according to claim 10, **characterised in that** the solid-state laser is formed as an optically excited solid-state laser, preferably as a diode-pumped or lamp-pumped solid-state laser.

11. Use of the device according to one of claims 8 to 11 for welding components made from a directionally solidified or a monocrystalline material.

12. Use of the device according to one of claims 8 to 11, for welding components made from a nickel-based alloy or cobalt-based alloy, in particular components made from an MCrAlY material.

## Revendications

1. Procédé de soudage, en particulier pour le soudage de réparation, d'éléments de construction de préférence d'une turbine à gaz, en particulier d'un groupe motopropulseur, dans lequel un élément de construction (10) est soudé au laser au moyen d'au moins une source laser (12), la ou chaque source laser (12) est utilisée en mode pulsé et la durée des impulsions est réglée de manière à être variable, **caractérisé en ce qu**'un fil de soudage (17) est guidé automatiquement dans la région du faisceau laser (17) de la ou de chaque source laser (12), dans lequel une avance de fil du fil de soudage (17) est commandée en fonction de la durée des impulsions de la ou de chaque source laser (12).

2. Procédé selon la revendication 1, **caractérisé en ce que** le soudage au laser de l'élément de construction (10) est réalisé dans un état non préchauffé de l'élément de construction.

3. Procédé selon la revendication 1 ou 2, **caractérisé en ce que** le soudage au laser de l'élément de construction (10) est réalisé sous une atmosphère de gaz protecteur.

4. Procédé selon l'une quelconque des revendications 1 à 3, **caractérisé en ce que** le fil de soudage (17) est avancé lors de chaque impulsion de la ou de chaque source laser (12).

5. Application du procédé selon l'une quelconque des revendications 1 à 4 pour le soudage d'éléments de construction en un matériau à solidification dirigée ou monocristallin.

6. Application du procédé selon l'une quelconque des revendications 1 à 4 pour le soudage d'éléments de construction en un alliage à base de nickel ou un alliage à base de cobalt, en particulier d'éléments de construction en un matériau MCrAIY.

7. Dispositif ce soudage, en particulier pour le soudage de réparation, d'éléments de construction (10) de préférence d'une turbine à gaz, en particulier d'un groupe motopropulseur, avec au moins une source laser (12), dans lequel le dispositif est réalisé en particulier sous la forme d'un dispositif laser manuel, le dispositif comporte un système de commande pour pulser la ou chaque source laser (12) et la durée des impulsions est réglable dé façon variable à l'aide du système de commande, **caractérisé par** un dispositif d'alimentation de fil (19) pouvant être commandé par le système de commande, qui guide un fil de soudage (10) automatiquement dans la région du faisceau laser (17) de la ou de chaque source laser (12), dans lequel le système de commande commande le dispositif d'alimentation de fil (19) d'une telle manière qu'une avance de fil du fil de soudage (20) dépendre de la durée des impulsions de la ou de chaque source laser (12).

8. Dispositif selon la revendication 7, **caractérisé par** un espace de réception (11) pour l'élément de construction à souder (10), dans lequel le soudage au laser peut être effectué dans l'espace de réception (11) sous une atmosphère de gaz protecteur.

9. Dispositif selon la revendication 7 ou 8, **caractérisé en ce que** la ou chaque source laser (12) est réalisée sous la forme d'un laser à corps solide, en particulier un laser à corps solide au Nd-YAG.

10. Dispositif selon la revendication 9, **caractérisé en ce que** le laser à corps solide est réalisé sous la forme d'un laser à corps solide à exaltation optique, de préférence à pompage par diode ou à pompage par lampe.

11. Utilisation du dispositif selon l'une quelconque des revendications 7 à 10 pour le soudage d'éléments de construction en un matériau à solidification dirigée ou monocristallin.

12. Utilisation du dispositif selon l'une quelconque des revendications 7 à 10 pour le soudage d'éléments de constriction en un alliage à base de nickel ou un alliage à base de cobalt, en particulier d'éléments de construction en un matériau MCrAlY.
